# EUROPEAN PATENT APPLICATION

(11) **EP 4 759 575 A1**
(43) Date of publication of application: **17.06.2026**
(21) Application number: 25195948.2
(22) Date of filing: 14.08.2025
(51) Int. Cl.: B60H 1/00, B60H 3/00

(54) **APPARATUS FOR ADAPTIVE CLEANING OF A VEHICLE CABIN AND METHOD THEREOF**

(30) Priority: 12.12.2024 IN 202441098533
(71) Applicant: L & T Technology Services Limited, Chennai 600089 (IN)
(72) Inventor: MANDAL, SOUGAT KUMAR, 600089 Chennai (IN); GOYAL, KUNAL, 636007 Salem (IN); SUBRAMANI, SRIDHAR, 600097 Chennai (IN); RAVICHANDRAN, DEENADAYALAN SUBRAMANI, 603004 Mahindra World City (IN)
(74) Representative: Studio Torta S.p.A.

(57) **Abstract**

The present disclosure discloses a system 100 for cleaning and maintaining air quality of a cabin of a vehicle. The system 100 comprises sensors 106A-106N configured to detect conditions related to quality of air and occupancy within the cabin. The system 100 comprises a plurality of cleaning units placed at various positions within the cabin, comprising: one or more sonic wave generators, one or more cyclonic vacuum units, and electrostatic dust collectors. The system 100 further comprises a control unit configured to receive, in real time, from the sensors, inputs pertaining to the detected conditions during an ON state of the vehicle, and adaptively operate the plurality of cleaning units based on the inputs received from the one or more sensors to clean and maintain the air quality of the cabin of the vehicle.

## Description

### TECHNICAL FIELD

The present disclosure generally relates to vehicle cabin cleaning and air quality maintenance. More particularly, the present disclosure relates to a smart and adaptive cleaning and air quality maintenance inside the cabin of a vehicle.

### BACKGROUND

Maintaining in-cabin cleanliness and air quality maintenance for a vehicle have become increasingly important due to a rise in the air quality degradation. Vehicles, particularly passenger vehicles, include a confined space, i.e., cabin, that can accumulate dust, dirt, allergens, bacteria, viruses, and other contaminants, while usage of the vehicle. In addition, the air inside the cabin may become stale and polluted due to the external environment and due to the built up of pollutants from external sources. Existing systems and techniques for maintaining air quality and cleanliness involve the usage of air filters, manual cleaning, which provide partial cleaning. In addition, such techniques do not provide solutions for removing difficult to remove contaminants. One of the key challenges in maintaining vehicle interiors is the removal of dust, dirt, and debris from hard-to-reach areas, such as crevices and upholstery. Therefore, the existing techniques may not effectively clean a vehicle cabin and, thus, are ineffective in maintaining the air quality inside the cabin.

In view of the above, there is a need for an efficient system and method maintaining vehicle interiors with effective removal of dust, dirt, and debris from hard-to-reach areas, such as crevices and upholstery.

The information disclosed in this background of the disclosure section is only for enhancement of understanding of the general background of the invention and should not be taken as an acknowledgement or any form of suggestion that this information forms the prior art already known to a person skilled in the art.

### SUMMARY

In an embodiment, the present disclosure discloses a system for cleaning and maintaining air quality of a cabin of a vehicle. The system comprises one or more sensors, a plurality of cleaning units, and a control unit. The one or more sensors is configured to detect conditions related to at least one of the quality of air and occupancy within the cabin of the vehicle. The plurality of cleaning units is placed at various positions within the cabin. The plurality of cleaning units comprises one or more sonic wave generators, one or more cyclonic vacuum units, and electrostatic dust collectors. The one or more sonic wave generators are configured to emit a high-frequency sonic wave to dislodge dirt and dust debris from surfaces and crevices. The one or more cyclonic vacuum units are configured to ensure required suction to remove the dislodged debris within the cabin. The electrostatic dust collectors are configured to attract and capture fine particulate matter and allergens from the cabin. The control unit is configured to receive, in real time, from the one or more sensors, inputs pertaining to the detected conditions during an ON state of the vehicle, and adaptively operate one or more of the plurality of cleaning units based on the inputs received from the one or more sensors to clean and maintain the air quality of the cabin of the vehicle.

In another embodiment, the present disclosure discloses a method for cleaning and maintaining air quality of a cabin of a vehicle. The vehicle comprises a plurality of cleaning units placed at various positions within the cabin. The method comprises receiving, in real time, by a control unit and from one or more sensors, inputs pertaining to conditions during an ON state of the vehicle, wherein the conditions are related to at least one of quality of air and occupancy within the cabin of the vehicle. Further, the method comprises adaptively operating, by the control unit, one or more of the plurality of cleaning units based on the inputs received from the one or more sensors to clean and maintain the air quality of the cabin of the vehicle. The plurality of cleaning units comprises one or more sonic wave generators configured to emit a high-frequency sonic wave to dislodge dirt and dust debris from surfaces and crevices, one or more cyclonic vacuum units configured to ensure required suction to remove the dislodged debris within the cabin, and electrostatic dust collectors configured to attract and capture fine particulate matter and allergens from the cabin.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE ACCOMPANYING DRAWINGS

To easily identify the discussion of any particular element or act, the most significant digit or digits in a reference number refer to the figure number in which that element is first introduced.
**Fig. 1** illustrates a schematic block diagram of an environment of a system for cleaning and air quality management in vehicle interiors, in accordance with an embodiment of the present disclosure.
**Fig. 2** illustrates a block diagram of the system for cleaning and air quality management in vehicle interiors as shown in Fig. 1, in accordance with some embodiments of the present disclosure.
**Fig. 3** illustrates a flowchart of a method for cleaning and air quality management in vehicle interiors, in accordance with some embodiments of the present disclosure.
**Fig. 4** illustrates a block diagram of a general-purpose computing system for cleaning and air quality management in vehicle interiors, in accordance with some embodiments of the present disclosure.

It should be appreciated by those skilled in the art that any block diagram herein represents conceptual views of illustrative systems embodying the principles of the present subject matter. Similarly, it will be appreciated that any flow charts, flow diagrams, state transition diagrams, pseudo code, and the like represent various processes which may be represented in computer readable medium and executed by a computer or processor, whether or not such computer or processor is explicitly shown.

### DETAILED DESCRIPTION

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and will be described in detail below. It should be understood, however, that it is not intended to limit the disclosure to the particular forms disclosed, but on the contrary, the disclosure is to cover all modifications, equivalents, and alternatives falling within the scope of the disclosure.

The terms "comprises", "comprising", or any other variations thereof, are intended to cover a non-exclusive inclusion, such that a setup, device, or method that comprises a list of components or steps does not include only those components or steps but may include other components or steps not expressly listed or inherent to such setup or device or method. In other words, one or more elements in a system or apparatus proceeded by "comprises... a" does not, without more constraints, preclude the existence of other elements or additional elements in the system or apparatus.

The terms like "at least one" and "one or more" may be used interchangeably throughout the description. The terms like "a plurality of" and "multiple" may be used interchangeably throughout the description.

The present subject matter provides a system, an apparatus, and method for advanced eco-friendly cleaning and air quality management in vehicle interiors. The automatic in-cabin cleaning system as per the present subject matter transforms the way vehicle interiors are maintained. The system as per the present subject matter integrates seamlessly with vehicle interiors, ensuring a pristine and hygienic environment for passengers. The system is designed to overcome the limitations of traditional vacuum systems, the apparatus provides efficient, thorough cleaning without compromising comfort or safety.

The apparatus for advanced eco-friendly cleaning and air quality management in vehicle interiors tackles the challenge of the existing techniques with its advanced cleaning mechanism. It employs a triple-action cleaning approach, combining sonic wave technology, electrostatic dust collectors, and a cyclonic vacuum system. The high-frequency sound waves produced by the sonic wave technology dislodge dirt and dust particles from surfaces and crevices, while the electrostatic dust collectors attract and capture fine particulate matter and allergens, providing a deep clean without the need for harsh chemicals. The powerful suction of the cyclonic vacuum system ensures that all dislodged debris is efficiently removed, leaving the interior spotless. In addition to its advanced cleaning mechanism, the system features an intelligent sensor array that enhances its functionality. The indoor PM Sensor monitors real-time levels of PM2.5 and PM10, ensuring precise air quality management within the cabin. The occupancy sensor detects the presence of passengers, ensuring that cleaning operations only occur when the cabin is unoccupied. The Infrared surface sensor identifies surface types and adjusts cleaning intensity and method, accordingly, optimizing the cleaning process for different materials. Furthermore, the gas and odor sensors detect harmful gases and unpleasant odors, triggering the air purification and deodorizing systems to ensure a fresh and safe cabin atmosphere.

To further enhance its cleaning capabilities, the apparatus for advanced eco-friendly cleaning and air quality management incorporates nano-mist sprayers emit a fine mist of eco-friendly cleaning solution that sanitizes and freshens the cabin without leaving any residue, providing an added layer of cleanliness. Despite its powerful cleaning capabilities, the system prioritizes noise and power efficiency. It is engineered with whisper-quiet motors and energy-efficient components, minimizing noise pollution and reducing power consumption. This ensures an undisturbed and eco-friendly cleaning process, enhancing the overall passenger experience.

The apparatus also offers smart control and connectivity features, further elevating the user experience. The microcontroller unit (MCU) of the system logs data on air quality, cleaning cycles, and system performance. Users can access this data via a dedicated mobile app or the vehicle's infotainment system, allowing them to monitor and track the cleaning progress. Bluetooth and Wi-Fi integration enables seamless connectivity with mobile devices, enabling remote monitoring and control. Users can schedule and customize cleaning sessions according to their preferences, adding convenience to their cleaning routine.

The operational workflow of the system is designed to be user-friendly and efficient. The system performs a self-diagnostic check during initialization, scanning for air quality and occupancy. Once the cabin is unoccupied, the system begins the surface and crevice cleaning process using the triple-action cleaning mechanism. Simultaneously, the gas and odor sensors detect harmful substances, triggering the air purification and deodorizing mechanisms to ensure a clean and fresh cabin atmosphere. Real-time data on air quality and cleaning progress is logged and displayed to the user via the connected app, providing transparency and control over the cleaning process.

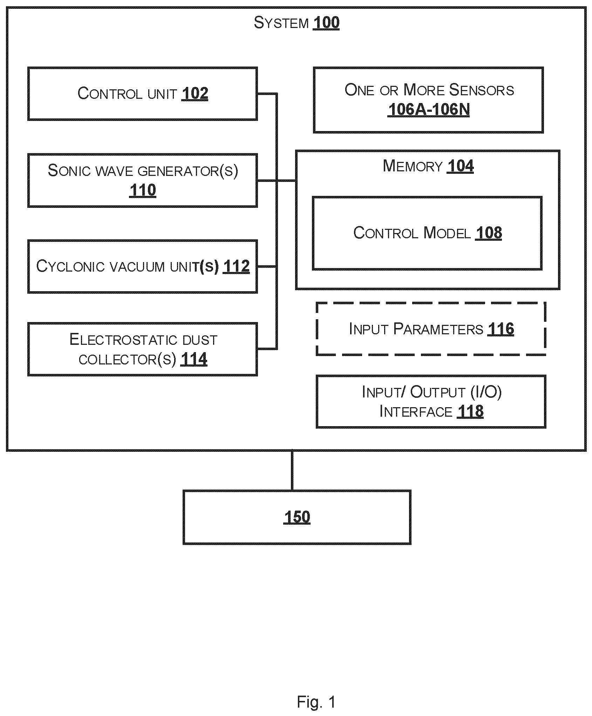

**Fig. 1** illustrates a schematic block diagram of an environment of a system for cleaning and air quality management in vehicle interiors, in accordance with an embodiment of the present disclosure.

With reference to Fig. 1, there is shown a block representation of the system 100 which is configured to implement the techniques of the present subject matter. The system 100 may comprise a control unit 102, a memory 104, and one or more sensors 106A-106N. The memory 104 may comprise a control model 108. The system 100 may also comprise a plurality of cleaning units placed at various positions within the cabin. The plurality of cleaning units may comprises one or more sonic wave generators 110 configured to emit a high-frequency sonic wave to dislodge dirt and dust debris from surfaces and crevices, one or more cyclonic vacuum units 112 configured to ensure required suction to remove the dislodged debris within the cabin, and electrostatic dust collectors 114 configured to attract and capture fine particulate matter and allergens from the cabin. The system 100 may also comprise an Input/ Output (I/O) interface 118. Further, in some embodiments, the system 100 may be communicably coupled with a communication network of the vehicle 150 via the I/O interface 118.

In an embodiment, the control unit 102 may also be referred as a "Central Processing Units 102", "CPUs 102", or "one or more processors 102"). In some embodiments, the memory 104 may be communicatively coupled to the control unit 102. For example, the memory 104 is in electronic communication with the control unit 102. The memory 104 stores instructions executable by the control unit 102. The control unit 102 may comprise at least one data processor for executing program components for executing user or system-generated requests. The instructions, which, on execution by the control unit 102, may cause the control unit 102 to clean and maintain air quality of the cabin of the vehicle 150. Specifically, the instructions, which, on execution by the control unit 102, may cause the control unit 102 to control the plurality of cleaning units for efficient cleaning and maintenance of air quality of the cabin of the vehicle 150. The I/O interface 118 (also referred to hereinafter as I/O interfaces 118) is coupled with the control unit 102 through which an input signal or/and an output signal is communicated. For example, the I/O interfaces 118 may allow the system 100 to communicate with one or more nodes/devices either directly or through other devices. In an embodiment, the system 100 may be implemented in a variety of computing systems, such as a vehicle infotainment unit, a laptop computer, a desktop computer, a Personal Computer (PC), a notebook, a smartphone, a tablet, a server, a network server, a cloud-based server, and the like. Further, the system 100 may comprise a network interface (not shown). The network interface may allow the system 100 to interact with one or more networks either directly or via any other network. In an example, the system 100 may utilize the network interface to interact with a data storage (not shown) via the communication network. For example, the data storage may include instruction or pre-defined parameters for the control unit 102 to control the plurality of cleaning units. For example, the data storage may also store data collected by the one or more sensors 106A-106N.

The control unit 102 may be disposed in communication with one or more input/output (I/O) devices (not shown) via the I/O interface 118. The I/O interface 118 may employ communication protocols/methods.

Using the I/O interface 118, the system 100 may communicate with one or more I/O devices.

The control unit 102 may be disposed of in communication with the communication network via the network interface. The network interface may communicate with the communication network. The network interface may employ connection protocols required for implementation of the present subject matter.

The communication network includes, but is not limited to, vehicle communication network, a direct interconnection, a peer to peer (P2P) network, local area network (LAN), wide area network (WAN), wireless network (e.g., using Wireless Application Protocol), the Internet, Wi-Fi, and such. The network may either be a dedicated network or a shared network, which represents an association of the several types of networks that use a variety of protocols to communicate with each other. In an embodiment, the system 100 may receive data items required for operation of the control unit 102 over the communication network.

In some embodiments, the control unit 102 may be disposed in communication with a memory 104 (e.g., RAM, ROM, and the like) via a storage interface (not shown). The storage interface (not shown) may connect to memory 104 including, without limitation, memory drives, removable disc drives, and the like, employing connection protocols.

The memory 104 may store a collection of program or database components, including, without limitation, user interface (not shown), an operating system (not shown), web browser (not shown), and the like. In some embodiments, the system 100 may store user/application data, such as, the data, variables, records, and the like, as described in this disclosure. Such databases may be implemented as fault-tolerant, relational, scalable, secure databases such as Oracle ^{®} or Sybase^{®}. The memory 104 may be communicatively coupled to the control unit 102. The memory 104 stores instructions, executable by the control unit 102, which, on execution, may cause the control unit 102 to clean and maintain air quality of the cabin of the vehicle 150.

Furthermore, one or more computer-readable storage media may be utilized in implementing embodiments consistent with the present disclosure. A computer-readable storage medium refers to any type of physical memory on which information or data readable by a control unit 102 may be stored. Thus, a computer-readable storage medium may store instructions for execution by the control unit 102, including instructions for causing the control unit 102 to perform steps or stages consistent with the embodiments described herein. The term "computer-readable medium" should be understood to include tangible items and exclude carrier waves and transient signals, i.e., be non-transitory. Examples include Random Access Memory (RAM), Read-Only Memory (ROM), volatile memory, non-volatile memory, hard drives, Compact Disc Read-Only Memory (CD ROMs), Digital Video Disc (DVDs), flash drives, disks, and any other known physical storage media.

In an embodiment, the one or more sensors 106A-106N may be configured to detect conditions related to at least one of quality of air and occupancy within the cabin of the vehicle. Further, the control unit 102 may be configured to receive, in real time, from the one or more sensors, inputs pertaining to the detected conditions during an ON state of the vehicle. Further, the control unit 102 may be configured to adaptively operate one or more of the plurality of cleaning units based on the inputs received from the one or more sensors to clean and maintain the air quality of the cabin of the vehicle. In another example, the inputs may be pre-collected and prestored in a memory associated with the data storage. In an example embodiment, the input may also include environmental conditions related to a surrounding of the vehicle 150 which may affect the overall air quality inside of the cabin of the vehicle 150. The environmental conditions may include, but not limited to, air quality parameters, ambient temperature, humidity, climatic precipitation, etc. and sudden variation in such parameters.

In example embodiments, a set of sensors from the plurality of sensors may be configured to measure related parameters of the vehicle operation and cabin environment at different strategic locations.

In an embodiment, the control unit 102 may be further configured to employ the control model 108, stored in the memory 104, based on the inputs, to create an environment for controlling the plurality of cleaning units. In an example, the control unit 102 may be configured to analyze the received inputs, based on the control model, to determine control strategy for each of the plurality of cleaning units.

In some embodiment, the control unit 102 may be configured to identify one or more conditions inside the cabin environment and outside ambient environment related to the vehicle 150. which requires attention for improving the anomalous patterns by identifying patterns in the data, pertaining to the one or more design parameters and the one or more shape function parameters, which do not adhere to expected or desired environment conditions. The capability to recognize or detect undesired environmental conditions provides highly useful insights for optimizing the control strategy for controlling each of the plurality of cleaning units.

The plurality of cleaning units may implement a triple-action cleaning mechanism. For example, the implementation of an adaptive combination of the one or more sonic wave generators 110, the one or more cyclonic vacuum units 112, and the electrostatic dust collectors 114 allows for efficient cleaning and air quality maintenance of the cabin of the vehicle 150. The one or more sonic wave generators 110 utilizes high-frequency sound waves to dislodge dirt and dust particles from surfaces and crevices, ensuring thorough cleaning even in hard-to-reach areas. The one or more sonic wave generators 110 may be embedded in the hard-to-reach areas.

The one or more cyclonic vacuum units 112 ensures powerful suction to efficiently remove all dislodged debris. In some example, the one or more cyclonic vacuum units 112 may be integrated with a central vacuum unit located in the vehicle's trunk or under-seat storage compartments.

The electrostatic dust collectors 114 attract and capture fine particulate matter and allergens, providing a deep clean without the need for harsh chemicals. In some example, the electrostatic dust collectors 114 may be integrated within a main cleaning unit of the vehicle 150.

The system 100 may also include one or more nano-mist sprayers (not shown) to emit a fine mist of eco-friendly cleaning solution that sanitizes and freshens the cabin without leaving residue. The one or more nano-mist sprayers may be integrated within the vehicle's air conditioning vents.

In some examples, the one or more sensors 106A-106N may include a smart sensor array including an indoor particulate matter (PM) sensor, an occupancy sensor, an Infrared surface sensor, and one or more gas and odor sensors. The indoor PM may be mounted on the vehicle's ceiling or dashboard. The indoor PM sensor monitors real-time levels of PM2.5 and PM10, ensuring precise air quality management within the cabin. The occupancy sensor detects the presence of passengers, ensuring cleaning operations only occur when the cabin is unoccupied. The occupancy sensor may be installed on the vehicle's ceiling or integrated into the seats. The occupancy sensor is configured to detect the presence of passengers to ensure cleaning operations adaptively occur only when the cabin is unoccupied. The Infrared surface sensor identifies surface types and adjusts cleaning intensity and method accordingly. The Infrared surface sensor may be positioned on dashboards and hard to reach areas. The one or more gas and odor sensors detect harmful gases and unpleasant odors, triggering the air purification and deodorizing systems. The one or more gas and odor sensors may be strategically placed in the vehicle's air ducts and near the cabin floor.

In some example, the system 100 is engineered with whisper-quiet motors and energy-efficient components to minimize noise and reduce power consumption, ensuring an undisturbed and eco-friendly cleaning process. The whisper-quiet motors may be integrated into the central vacuum unit. The energy-efficient components may include motors, sensors, and associated control units. The system 100 may also be configured with smart control and connectivity mechanisms. For example, the system 100 may implement microcontroller unit (MCU) control and data logging. For example, the MCU control and data logging may be implemented by the central control unit located in the vehicle's dashboard or trunk. The MCU logs data on air quality, cleaning cycles, and system performance. Users can access this data via a dedicated mobile app or the vehicle's infotainment system. Further, the system 100 may implement Bluetooth and Wi-Fi integration to provide seamless connectivity with mobile devices for remote monitoring and control, allowing users to schedule and customize cleaning sessions. The Bluetooth and Wi-Fi integration may be integrated within the central control unit.

In some examples, the control unit 102 is configured to determine concentration value of the particulate matter inside the cabin, based on the inputs received from the one or more sensors. The one of more sensors include the PM sensor. Further, the control unit 102 selectively generates an alert, on infotainment unit of the vehicle, to activate the one or more sonic wave generation units, the one or more cyclonic vacuum units and the electrostatic dust collectors, in response to detecting the concentration value of the particulate matter inside the cabin is between a first threshold and a second threshold. For example, the first threshold may be 2 µg/m3 and the second threshold may be 5 µg/m3. Furthermore, the control unit 102 selectively activates the one or more sonic wave generators 110, the one or more cyclonic vacuum units 112, and the electrostatic dust collectors 114, in response to detecting the concentration value of the particulate matter inside the cabin is above the second threshold.

In an example embodiment, the control unit 102 is further configured to detect the position of plurality of window panes of the vehicle. Further, the control unit 102 deactivates the one or more sonic wave generation units, the one or more cyclonic vacuum units, and the electrostatic dust collectors, in response to detecting at least one of the plurality of window panes being in open state.

In an example embodiment, the control unit 102 is further configured to detect the presence of at least one occupant within the cabin, based on the inputs received from the one or more sensors, wherein the one or more sensors include an occupancy sensor. Further, the control unit 102 is configured to deactivate the one or more sonic wave generation units, in response to detecting at least one occupant within the cabin.

In an example embodiment, the control unit 102 is configured to determine that the vehicle is in a moving state. Further, the control unit 102 is configured to determine, upon determining the moving state of the vehicle, concentration value of the particulate matter inside the cabin, based on the inputs received from the one or more sensors, wherein the one of more sensors include the PM sensor. In an example embodiment, the control unit 102 is configured to selectively generate an alert, on infotainment unit of the vehicle, to activate at least one of the one or more cyclonic vacuum units and the electrostatic dust collectors, in response to detecting the concentration value of the particulate matter inside the cabin is between a first threshold and a second threshold. Further, the control unit 102 is configured to selectively activate the at least one of the one or more cyclonic vacuum units and the electrostatic dust collectors, in response to detecting the concentration value of the particulate matter inside the cabin is above the second threshold. Furthermore, the presence of harmful gases and unpleasant odours may be determined inside the cabin, based on the inputs received from the one or more sensors, such as the gas sensor. Thereafter, the one or more cyclonic vacuum units may be selectively activated, in response to detecting the presence of harmful gases inside the cabin.

In an example embodiment, the control unit 102 is configured to determine that the vehicle is in a stalled state. Further, the control unit 102 is configured to determine presence of at least one occupant within the cabin, based on the inputs received from the one or more sensors, wherein the one or more sensors include an occupancy sensor. Further, the control unit 102 is configured to determine, upon determining absence of at least one occupant within the cabin, concentration value of the particulate matter inside the cabin, based on the inputs received from the one or more sensors, wherein the one of more sensors include the PM sensor.

Thereafter, the control unit 102 is configured to selectively generate an alert, on infotainment unit of the vehicle, to activate at least one of the one or more cyclonic vacuum units and the electrostatic dust collectors, in response to detecting the concentration value of the particulate matter inside the cabin is between a first threshold and a second threshold. Further, the control unit 102 is configured to selectively activate the at least one of the one or more cyclonic vacuum units and the electrostatic dust collectors, in response to detecting the concentration value of the particulate matter inside the cabin is above the second threshold.

Furthermore, the control unit 102 is configured to determine, upon selective activation, presence of dirt and dust particles in one or more inaccessible regions and obstructed regions inside the cabin, based on the inputs received from the one or more sensors, wherein the one of more sensors include an Infrared surface detection sensor. Further, upon determination of the presence of dirt and dust particles, the one or more sonic wave generation units may be activated.

In some embodiments, upon selective activation, the presence of harmful gases and unpleasant odours may be determined inside the cabin, based on the inputs received from the one or more sensors, wherein the one of more sensors include the gas sensor. Further, the one or more cyclonic vacuum units may be activated in response to detecting the presence of harmful gases inside the cabin.

In some embodiments, the control unit 102 is further configured to identify a surface type based on the inputs received from the one or more sensors, wherein the one of more sensors include an Infrared surface detection sensor, and adaptively control operations of the one or more cleaning units, based on the identified surface type.

In some embodiments, the control unit 102 is configured to detect the presence of harmful gases and unpleasant odours inside the cabin, based on the inputs received from the one or more sensors, such as the gas sensor. Further, the one or more cyclonic vacuum units may be activated in response to detecting the presence of harmful gases inside the cabin. Subsequently, the one or more nano-mist sprayers may be activated to emit fine mist of eco-friendly cleaning solution within the cabin, in response to detecting an unpleasant odour inside the cabin.

As per described techniques of the present subject matter, the system 100 allows achieving optimal air quality maintenance and cleaning performance as per desired conditions and standard environmental constraints.

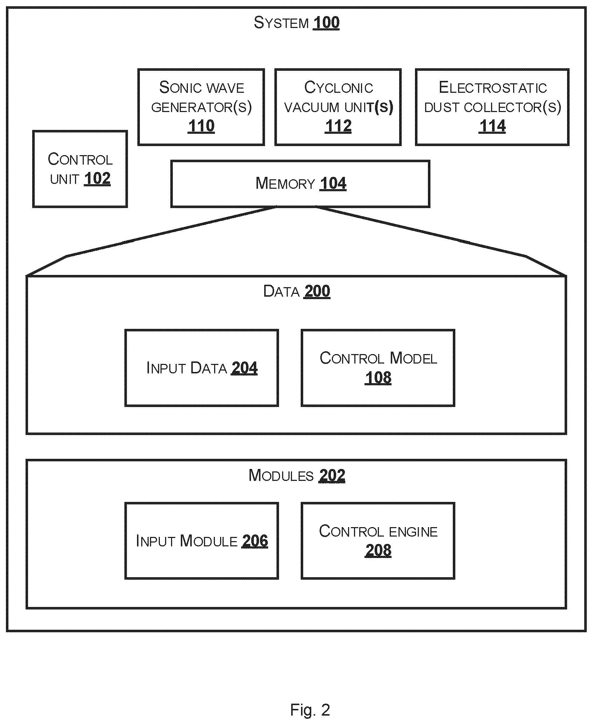

**Fig. 2** illustrates a block diagram of the system for cleaning and air quality management in vehicle interiors as shown in Fig. 1, in accordance with some embodiments of the present disclosure.

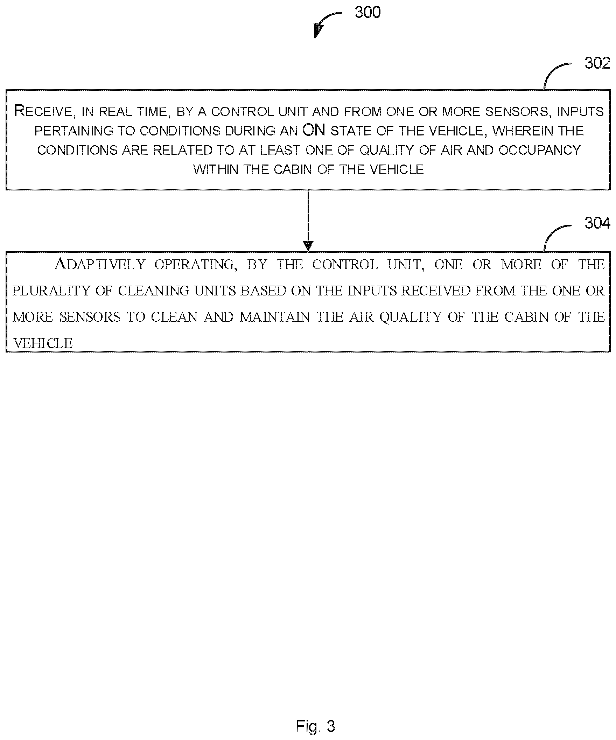

As described under the description of Fig. 3, the system 100 comprises the control unit 102, the memory 104, and the Input/ Output (I/O) interface 118. In an embodiment, the system 100 may be configured to perform cleaning and maintaining air quality of the cabin of the vehicle 150. In some embodiments, the memory 104 may be communicatively coupled to the control unit 102. For example, the memory 104 is in electronic communication with the control unit 102. The memory 104 stores instructions executable by the control unit 102. The control unit 102 may comprise at least one data processor for executing program components for executing user or system-generated requests. The instructions, which, on execution by the control unit 102, may cause the control unit 102 to perform cleaning and maintaining air quality of the cabin of the vehicle 150. The I/O interface 118 is coupled with the control unit 102 through which an input signal or/and an output signal is communicated. In an embodiment, the system 100 may be implemented in a variety of computing systems, such as a laptop computer, a desktop computer, a Personal Computer (PC), a notebook, a smartphone, a tablet, a server, a network server, a cloud-based server, and the like.

In an embodiment, the memory 104 may include data 200 and one or more modules 202. The one or more modules 202 may be configured to perform the steps of the present disclosure using the data 200, to perform cleaning and maintaining air quality of the cabin of the vehicle 150. In an embodiment, each of the one or more modules 202 may be a hardware unit which may be configured external to the memory 104 and coupled with the control unit 102. As used herein, the term modules 202 refers to an Application Specific Integrated Circuit (ASIC), an electronic circuit, a Field-Programmable Gate Arrays (FPGA), Programmable System-on-Chip (PSoC), a combinational logic circuit, and/or other suitable components that provide described functionality. The one or more modules 202, when configured with the described functionality defined in the present disclosure, will result in a novel hardware.

In one implementation, the modules 202 may include, for example, an input module 206 and a control engine 208. It will be appreciated that such aforementioned modules 202 may be represented as a single module or a combination of different modules. In one implementation, the data 200 may include, for example, input data 204 and a control model 206.

In an embodiment, the input module 206 may be configured to receive input data 204 including the input determined by the one or more sensors 106A-106N. In an example embodiment, the input may also include environmental conditions, both in-cabin and surrounding environment.

In an embodiment, the control engine 208 may be configured to determine a control model for adaptive cleaning and maintaining air quality of the cabin of the vehicle 150.

A person skilled in the art will appreciate that the control unit 102 may be configured to perform the steps of the present disclosure using the data 200 instead of the one or more modules 202, to perform cleaning and maintaining air quality of the cabin of the vehicle 150.

A person skilled in the art will appreciate that any techniques other than the above-mentioned technique may be used perform the functionality of the input module 206, the control engine 208, and the DOE engine 118.

**Fig. 3** illustrates a flowchart of a method for cleaning and air quality management in vehicle interiors, in accordance with some embodiments of the present disclosure.

As illustrated in Fig. 5, the method 300 may comprise one or more steps. The method 300 may be described in the general context of computer executable instructions. Generally, computer executable instructions can include routines, programs, objects, components, data structures, procedures, modules, and functions, which perform particular functions or implement particular abstract data types.

The order in which the method 300 is described is not intended to be construed as a limitation, and any number of the described method blocks can be combined in any order to implement the method. Additionally, individual blocks may be deleted from the methods without departing from the scope of the subject matter described herein. Furthermore, the method can be implemented in any suitable hardware, software, firmware, or combination thereof.

At block 302, the control unit 102 of the system 100 may be configured to receive, in real time, by a control unit and from one or more sensors, inputs pertaining to conditions during an ON state of the vehicle, wherein the conditions are related to at least one of quality of air and occupancy within the cabin of the vehicle.

At block 304, the control unit 102 may be further configured to adaptively operate one or more of the plurality of cleaning units based on the inputs received from the one or more sensors to clean and maintain the air quality of the cabin of the vehicle.

In some embodiment, the plurality of cleaning units comprises: one or more sonic wave generators configured to emit a high-frequency sonic wave to dislodge dirt and dust debris from surfaces and crevices, one or more cyclonic vacuum units configured to ensure required suction to remove the dislodged debris within the cabin, and electrostatic dust collectors configured to attract and capture fine particulate matter and allergens from the cabin.

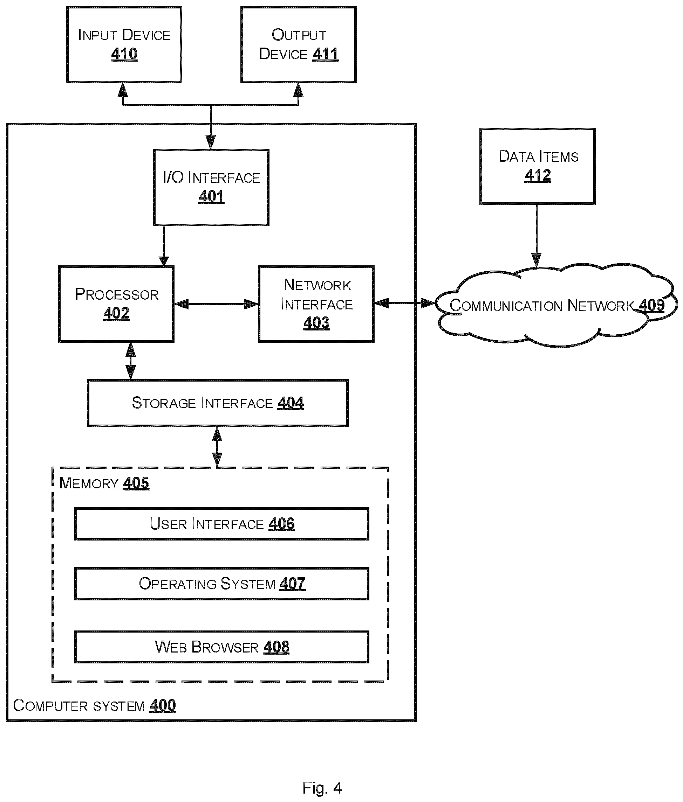

**Fig. 4** illustrates a block diagram of a general-purpose computing system for cleaning and air quality management in vehicle interiors, in accordance with some embodiments of the present disclosure.

In an embodiment, the computer system 400 may be the exemplary system 100. Thus, the computer system 400 may be used to sequentially transmit the plurality of messages 214 from the system 100 to the destination device 104. The computer system 400 may comprise input/output (I/O) interface 401 and a Central Processing Unit 402 (also referred as "CPU" or "processor"). The processor 402 may comprise at least one data processor. The processor 402 may include specialized processing units such as integrated system (bus) controllers, memory management control units, floating point units, graphics processing units, digital signal processing units, etc. The processor 402 may be used to realize the control unit 102 described in Fig. 1.

The processor 402 may be disposed of in communication with one or more input/output (I/O) devices (not shown) via the I/O interface 401. The I/O interface 401 may employ communication protocols/methods such as, without limitation, audio, analog, digital, monoaural, RCA, stereo, IEEE (Institute of Electrical and Electronics Engineers) -1394, serial bus, universal serial bus (USB), infrared, PS/2, BNC, coaxial, component, composite, digital visual interface (DVI), high-definition multimedia interface (HDMI), Radio Frequency (RF) antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 401, the computer system 400 may communicate with one or more I/O devices. The I/O interface 401 may be used to realize the I/O interface 118 described in Fig. 2a. For example, the input device 410 may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. The output device 411 may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

The processor 402 may be disposed of in communication with the communication network 409 via a network interface 403. The network interface 403 may communicate with the communication network 409. The network interface 403 may employ connection protocols including, without limitation, direct connect, Ethernet (e.g., twisted pair 10/100/1000 Base T), transmission control protocol/internet protocol (TCP/IP), token ring, IEEE 802.11 a/b/g/n/x, etc. The communication network 409 may include, without limitation, a direct interconnection, local area network (LAN), wide area network (WAN), wireless network (e.g., using Wireless Application Protocol), the Internet, etc.

The communication network 409 includes, but is not limited to, a direct interconnection, an e-commerce network, a peer to peer (P2P) network, local area network (LAN), wide area network (WAN), wireless network (e.g., using Wireless Application Protocol), the Internet, Wi-Fi, and such. The first network and the second network may either be a dedicated network or a shared network, which represents an association of the different types of networks that use a variety of protocols, for example, Hypertext Transfer Protocol (HTTP), Transmission Control Protocol/Internet Protocol (TCP/IP), Wireless Application Protocol (WAP), etc., to communicate with each other. Further, the first network and the second network may include a variety of network devices, including routers, bridges, servers, computing devices, storage devices, etc. The computer system 400 may receive data items 412 (input parameters 116, etc.) over a communication network 409.

In some embodiments, the processor 402 may be disposed of in communication with a memory 405 (e.g., RAM, ROM, etc. not shown in Figure 6) via a storage interface 404. The storage interface 404 may connect to memory 405 including, without limitation, memory drives, removable disc drives, etc., employing connection protocols such as serial advanced technology attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory 405 may store a collection of program or database components, including, without limitation, user interface 406, an operating system 407, web browser 408 etc. In some embodiments, computer system 400 store user/application data, such as, the data, variables, records, etc., as described in this disclosure. Such databases may be implemented as fault-tolerant, relational, scalable, secure databases such as Oracle ^{®} or Sybase^{®}. The memory 405 may be used to realize the memory 104 described in Fig. 3. The memory 405 may be communicatively coupled to the processor 402. The memory 405 stores instructions, executable by the one or more processors 602, which, on execution, may cause the processor 402 to perform cleaning and air quality management in vehicle interiors.

The operating system 407 may facilitate resource management and the operation of the computer system 400.

In some embodiments, the computer system 400 may implement the web browser 408 stored program component. The web browser 408 may be a hypertext viewing application, for example MICROSOFTR INTERNET EXPLORERTM, GOOGLER CHROMETM0, MOZILLAR FIREFOXTM, APPLER SAFARITM, etc. Secure web browsing may be provided using Secure Hypertext Transport Protocol (HTTPS), Secure Sockets Layer (SSL), Transport Layer Security (TLS), etc.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include Random Access Memory (RAM), Read-Only Memory (ROM), volatile memory, non-volatile memory, hard drives, Compact Disc Read-Only Memory (CD ROMs), Digital Video Disc (DVDs), flash drives, disks, and any other known physical storage media.

### Advantages

1. Automatic In-Cabin cleaning System that seamlessly integrates into vehicles revolutionizing the way vehicle interiors are cleaned, ensuring a pristine and hygienic environment for passengers, while overcoming the limitations of existing vacuum systems.
2. The system of the present subject matter seamlessly integrate with the vehicle's interior, providing efficient and thorough cleaning without compromising comfort or safety of the passengers/ occupants.
3. The present subject matter allows to tackle the challenges of effectively removing dust, dirt, and debris from hard-to-reach areas, such as crevices and upholstery, while minimizing noise and power consumption.
4. The present subject matter allows to detect and eliminate the presence of any harmful gases or unpleasant odour inside the vehicle cabin.
5. The system incorporates smart features, such as automatic sensing and adaptability to different surface types, to deliver a superior cleaning experience for all vehicle occupants.
The terms "including", "comprising", "having" and variations thereof mean "including but not limited to", unless expressly specified otherwise. The enumerated listing of items does not imply that any or all of the items are mutually exclusive, unless expressly specified otherwise. The terms "a", "an" and "the" mean "one or more", unless expressly specified otherwise.
In alternative embodiments, certain operations may be performed in a different order, modified, or removed. Moreover, steps may be added to the above-described logic and still conform to the described embodiments. Further, operations described herein may occur sequentially or certain operations may be processed in parallel. Yet further, operations may be performed by a single processing unit or by distributed processing units.
Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the disclosure of the embodiments of the invention is intended to be illustrative, but not limiting, of the scope of the invention, which is set forth in the following claims.

## Claims

1. A system (100) for cleaning and maintaining air quality of a cabin of a vehicle (150), the system (100) comprising:
one or more sensors (106A-106N) configured to detect conditions related to at least one of quality of air and occupancy within the cabin of the vehicle (150);
a plurality of cleaning units placed at various positions within the cabin, comprising:
one or more sonic wave generators (110) configured to emit a high-frequency sonic wave to dislodge dirt and dust debris from surfaces and crevices;
one or more cyclonic vacuum units (112) configured to ensure required suction to remove the dislodged debris within the cabin; and
electrostatic dust collectors (114) configured to attract and capture fine particulate matter and allergens from the cabin; and
a control unit (102) configured to:
receive, in real time, from the one or more sensors (106A-106N), inputs pertaining to the detected conditions during an ON state of the vehicle (150); and
adaptively operate one or more of the plurality of cleaning units based on the inputs received from the one or more sensors (106A-106N) to clean and maintain the air quality of the cabin of the vehicle (150).

2. The system (100) as claimed in claim 1, wherein the control unit (102) is configured to:
determine concentration value of the particulate matter inside the cabin, based on the inputs received from the one or more sensors (106A-106N), wherein the one of more sensors (106A-106N) include a particulate matter (PM) sensor;
selectively generate an alert, on infotainment unit of the vehicle (150), to activate the one or more sonic wave generation units, the one or more cyclonic vacuum units (112) and the electrostatic dust collectors (114), in response to detecting the concentration value of the particulate matter inside the cabin is between a first threshold and a second threshold; and
selectively activate the one or more sonic wave generation units, the one or more cyclonic vacuum units (112), and the electrostatic dust collectors (114), in response to detecting the concentration value of the particulate matter inside the cabin is above the second threshold.

3. The system (100) as claimed in claim 2, wherein the control unit (102) is further configured to:
detect position of plurality of window panes of the vehicle (150) (150); and
deactivate the one or more sonic wave generation units, the one or more cyclonic vacuum units (112), and the electrostatic dust collectors (114), in response to detecting at least one of the plurality of window panes being in open state.

4. The system (100) as claimed in claim 2, wherein the control unit (102) is further configured to:
detect presence of at least one occupant within the cabin, based on the inputs received from the one or more sensors (106A-106N), wherein the one or more sensors (106A-106N) include an occupancy sensor; and
deactivate the one or more sonic wave generation units, in response to detecting at least one occupant within the cabin.

5. The system (100) as claimed in claim 1, wherein the control unit (102) is configured to:
determine that the vehicle (150) is in a moving state;
determine, upon determining the moving state of the vehicle (150), concentration value of the particulate matter inside the cabin, based on the inputs received from the one or more sensors (106A-106N), wherein the one of more sensors (106A-106N) include a particulate matter (PM) sensor;
selectively generate an alert, on infotainment unit of the vehicle (150), to activate at least one of the one or more cyclonic vacuum units (112) and the electrostatic dust collectors (114), in response to detecting the concentration value of the particulate matter inside the cabin is between a first threshold and a second threshold;
selectively activate the at least one of the one or more cyclonic vacuum units (112) and the electrostatic dust collectors (114), in response to detecting the concentration value of the particulate matter inside the cabin is above the second threshold;
determine presence of harmful gases and unpleasant odours inside the cabin, based on the inputs received from the one or more sensors (106A-106N), wherein the one of more sensors (106A-106N) include a gas sensor; and
selectively activate the one or more cyclonic vacuum units (112), in response to detecting the presence of harmful gases inside the cabin.

6. The system (100) as claimed in claim 1, wherein the control unit (102) is configured to:
determine that the vehicle (150) is in a stalled state;
determine presence of at least one occupant within the cabin, based on the inputs received from the one or more sensors (106A-106N), wherein the one or more sensors (106A-106N) include an occupancy sensor;
determine, upon determining absence of at least one occupant within the cabin, concentration value of the particulate matter inside the cabin, based on the inputs received from the one or more sensors (106A-106N), wherein the one of more sensors (106A-106N) include a particulate matter (PM) sensor;
selectively generate an alert, on infotainment unit of the vehicle (150), to activate at least one of the one or more cyclonic vacuum units (112) and the electrostatic dust collectors (114), in response to detecting the concentration value of the particulate matter inside the cabin is between a first threshold and a second threshold;
selectively activate the at least one of the one or more cyclonic vacuum units (112) and the electrostatic dust collectors (114), in response to detecting the concentration value of the particulate matter inside the cabin is above the second threshold;
determine, upon selective activation, presence of dirt and dust particles in one or more inaccessible regions and obstructed regions inside the cabin, based on the inputs received from the one or more sensors (106A-106N), wherein the one of more sensors (106A-106N) include an Infrared surface detection sensor;
activate, upon determination of the presence of dirt and dust particles, the one or more sonic wave generation units;
determine, upon selective activation, presence of harmful gases and unpleasant odours inside the cabin, based on the inputs received from the one or more sensors (106A-106N), wherein the one of more sensors (106A-106N) include a gas sensor; and
activate the one or more cyclonic vacuum units (112), in response to detecting the presence of harmful gases inside the cabin.

7. The system (100) as claimed in claim 1, wherein the control unit (102) is further configured to:
identify a surface type based on the inputs received from the one or more sensors (106A-106N), wherein the one of more sensors (106A-106N) include an Infrared surface detection sensor; and
adaptively control operations of the one or more cleaning units, based on the identified surface type.

8. The system (100) as claimed in claim 1, wherein the control unit (102) is further configured to:
detect presence of harmful gases and unpleasant odours inside the cabin, based on the inputs received from the one or more sensors (106A-106N), wherein the one of more sensors (106A-106N) include a gas sensor;
activate the one or more cyclonic vacuum units (112), in response to detecting the presence of harmful gases inside the cabin; and
activate one or more nano-mist sprayers to emit fine mist of eco-friendly cleaning solution within the cabin, in response to detecting unpleasant odour inside the cabin.

9. A method for cleaning and maintaining air quality of a cabin of a vehicle (150), the vehicle (150) comprising a plurality of cleaning units placed at various positions within the cabin, the method comprising:
receiving, in real time, by a control unit (102) and from one or more sensors (106A-106N), inputs pertaining to conditions during an ON state of the vehicle (150), wherein the conditions are related to at least one of quality of air and occupancy within the cabin of the vehicle (150);
adaptively operating, by the control unit (102), one or more of the plurality of cleaning units based on the inputs received from the one or more sensors (106A-106N) to clean and maintain the air quality of the cabin of the vehicle (150),
wherein the plurality of cleaning units comprises: one or more sonic wave generators (110) configured to emit a high-frequency sonic wave to dislodge dirt and dust debris from surfaces and crevices, one or more cyclonic vacuum units (112) configured to ensure required suction to remove the dislodged debris within the cabin, and electrostatic dust collectors (114) configured to attract and capture fine particulate matter and allergens from the cabin.

10. The method as claimed in claim 9, further comprising:
determining concentration value of the particulate matter inside the cabin, based on the inputs received from the one or more sensors (106A-106N), wherein the one of more sensors (106A-106N) include a particulate matter (PM) sensor;
selectively generating an alert, on infotainment unit of the vehicle (150), to activate the one or more sonic wave generation units, the one or more cyclonic vacuum units (112) and the electrostatic dust collectors (114), in response to detecting the concentration value of the particulate matter inside the cabin is between a first threshold and a second threshold; and
selectively activating the one or more sonic wave generation units, the one or more cyclonic vacuum units (112) and the electrostatic dust collectors (114), in response to detecting the concentration value of the particulate matter inside the cabin is above the second threshold.

11. The method as claimed in claim 10, further comprising:
detecting position of plurality of window panes of the vehicle (150); and
deactivating the one or more sonic wave generation units, the one or more cyclonic vacuum units (112), and the electrostatic dust collectors (114), in response to detecting at least one of the plurality of window panes being in open state

12. The method as claimed in claim 10, further comprising:
detecting presence of at least one occupant within the cabin, based on the inputs received from the one or more sensors (106A-106N), wherein the one or more sensors (106A-106N) include an occupancy sensor; and
deactivating the one or more sonic wave generation units, in response to detecting at least one occupant within the cabin.

13. The method as claimed in claim 9, further comprising:
determining that the vehicle (150) is in a moving state;
determining, upon determining the moving state of the vehicle (150), concentration value of the particulate matter inside the cabin, based on the inputs received from the one or more sensors (106A-106N), wherein the one of more sensors (106A-106N) include a particulate matter (PM) sensor;
selectively generating an alert, on infotainment unit of the vehicle (150), to activate at least one of the one or more cyclonic vacuum units (112) and the electrostatic dust collectors (114), in response to detecting the concentration value of the particulate matter inside the cabin is between a first threshold and a second threshold;
selectively activating the at least one of the one or more cyclonic vacuum units (112) and the electrostatic dust collectors (114), in response to detecting the concentration value of the particulate matter inside the cabin is above the second threshold;
determining presence of harmful gases and unpleasant odours inside the cabin, based on the inputs received from the one or more sensors (106A-106N), wherein the one of more sensors (106A-106N) include a gas sensor; and
selectively activating the one or more cyclonic vacuum units (112), in response to detecting the presence of harmful gases inside the cabin.

14. The method as claimed in claim 9, further comprising:
determining that the vehicle (150) is in a stalled state;
determining presence of at least one occupant within the cabin, based on the inputs received from the one or more sensors (106A-106N), wherein the one or more sensors (106A-106N) include an occupancy sensor;
determining, upon determining absence of at least one occupant within the cabin, concentration value of the particulate matter inside the cabin, based on the inputs received from the one or more sensors (106A-106N), wherein the one of more sensors (106A-106N) include a particulate matter (PM) sensor;
selectively generating an alert, on infotainment unit of the vehicle (150), to activate at least one of the one or more cyclonic vacuum units (112) and the electrostatic dust collectors (114), in response to detecting the concentration value of the particulate matter inside the cabin is between a first threshold and a second threshold;
selectively activating the at least one of the one or more cyclonic vacuum units (112) and the electrostatic dust collectors (114), in response to detecting the concentration value of the particulate matter inside the cabin is above the second threshold;
determining, upon selective activation, presence of dirt and dust particles in one or more inaccessible regions and obstructed regions inside the cabin, based on the inputs received from the one or more sensors (106A-106N), wherein the one of more sensors (106A-106N) include an Infrared surface detection sensor;
activating, upon determination of the presence of dirt and dust particles, the one or more sonic wave generation units;
determining, upon selective activation, presence of harmful gases and unpleasant odours inside the cabin, based on the inputs received from the one or more sensors (106A-106N), wherein the one of more sensors (106A-106N) include a gas sensor; and
activating the one or more cyclonic vacuum units (112), in response to detecting the presence of harmful gases inside the cabin.

15. The method as claimed in claim 9, further comprising:
detecting presence of harmful gases and unpleasant odours inside the cabin, based on the inputs received from the one or more sensors (106A-106N), wherein the one of more sensors (106A-106N) include a gas sensor;
activating the one or more cyclonic vacuum units (112), in response to detecting the presence of harmful gases inside the cabin; and
activating one or more nano-mist sprayers to emit fine mist of eco-friendly cleaning solution within the cabin, in response to detecting unpleasant odour inside the cabin.
